# EUROPEAN PATENT APPLICATION

(11) **EP 4 462 527 A1**
(43) Date of publication of application: **13.11.2024**
(21) Application number: 23172694.4
(22) Date of filing: 11.05.2023
(51) Int. Cl.: H01M 8/243, H01M 8/0247, H01M 8/0256, H01M 8/1226

(54) **FUEL CELL AND INTERCONNECTION CONCEPTS FOR A FUEL CELL SYSTEM**

(71) Applicant: Airbus Operations GmbH, 21129 Hamburg (DE)
(72) Inventor: Nehter, Pedro, 21129 Hamburg (DE)
(74) Representative: Schornack, Oliver

(57) **Abstract**

The present disclosure relates to a fuel cell (100) comprising a tubular body (110), an inner and outer electrolyte layer (121, 122) disposed on the tubular body (110), an inner and outer electrically conductive layer (131, 132) disposed on the respective electrolyte layer (121, 122), and a first electric terminal (141) arranged at an interruption of the outer electrolyte layer (122) and the outer electrically conductive layer (132). Further disclosed are fuel cell systems having a plurality of such fuel cells (100), which are electrically connected in axial direction to form subgroups and in radial direction, in order to increase power output of the fuel cell system.

## Description

The present disclosure generally relates to a fuel cell and a fuel cell system. Particularly, the present disclosure relates to a fuel cell having a tubular body with inner and outer electrolyte and electrically conductive layers, and an electric terminal connected to the tubular body at an interruption of these layers. Further disclosed are fuel cell systems having a plurality of such fuel cells and an aircraft comprising such a fuel cell system.

Fuel cell systems become more and more important as power supplies in stationary as well as mobile applications requiring electric power. The fuel cells can include polymer membrane fuel cells, which can operate at lower temperatures, particularly below 200°C, as well as solid fuel cells (e.g., solid oxide fuel cells - SOFCs), which operate at higher temperatures, particularly between 500°C and 1000°C.

The SOFCs provide certain advantages over polymer membrane fuel cells, such as being more efficient and capable of internal reforming of hydrocarbon based fuels, but are heavier due to the origin development for stationary applications. Thus, the gravimetric power density of SOFCs is rather low compared to other types of fuel cells.

It is therefore an object of the present disclosure to provide a fuel cell and fuel cell systems having a higher gravimetric power density.

This object is solved by the present invention as defined in the independent claims. Preferred embodiments are defined by the dependent claims.

According to a first aspect to better understand the present disclosure, a fuel cell comprises a tubular body configured to conduct a reactant gas of the fuel cell, wherein the tubular body has an inner side surrounding an inner channel and an outer side. The tubular body forms a basic structure of the fuel cell.

Furthermore, the fuel cell comprises an inner electrolyte layer disposed on the inner side of the tubular body, an outer electrolyte layer disposed on the outer side of the tubular body, an inner electrically conductive layer disposed on the inner electrolyte layer, and an outer electrically conductive layer disposed on the outer electrolyte layer. For instance, the inner layers are disposed at the inner side of the tubular body, so that the inner layers face the inner channel of the tubular body. Likewise, the outer layers are disposed at the outer side of the tubular body.

The tubular body can be configured to form the main structure of the fuel cell, i.e. the tubular body provides the required rigidity and stiffness. The electrolyte layers can be added (coated) on the respective inner and outer surface of the tubular body. The electrically conductive layers can be added (coated) on the respective inner and outer electrolyte layers. Thus, the fuel cell can be manufactured in an easy manner, since the tubular body can be coated with the electrolyte layers and the electrically conductive layers.

For example, the material of the inner and outer electrolyte layers can be the same, so that both layers can be manufactured at the same time or at least in the same process step. Likewise, the inner and outer electrically conductive layers can be made from the same material, so that both layers can be manufactured simultaneously or at least in the same process step. The fuel cell can be manufactured continuously along an axial direction (a longitudinal direction) of the tubular body, wherein a length of the fuel cell (of the tubular body) can be defined by cutting or sawing the (coated) tubular body.

The fuel cell further comprises a first electric terminal. The outer electrolyte layer and the outer electrically conductive layer are interrupted at least in a circumferential direction of the tubular body, and the electric terminal is electrically connected to the tubular body at the interruption of the outer electrolyte layer and the outer electrically conductive layer.

In other words, the material of the tubular body is uncovered or exposed, so that the first electric terminal can be electrically connected to the tubular body. On the one hand, the outer layers (outer electrolyte layer and outer electrically conductive layer) can be removed to form the interruption. On the other hand, the tubular body can be formed to have a protrusion on the outer side of the tubular body and extending at least in the circumferential direction. The outer layers can then be omitted at this protrusion. Alternatively, the outer layers can also be coated over the protrusion and then be removed from the protrusion, as the coating of the entire tubular body (including the protrusion) and subsequent removal of portions of the outer layers may be performed faster and/or more cost-effective compared to covering the protrusion during coating.

Such fuel cell allows to maximise the active area, since the oxidation of the fuel takes place at the inner and outer side of the tubular body. This increases the gravimetric power density of the fuel cell. In addition, the first electric terminal at an outer side of the tubular body further facilitates an electric connection with another fuel cell, so that a stack or bundle of fuel cells can be packed denser, which increases the gravimetric power density of the entire fuel cell stack.

In an implementation variant, the tubular body can comprise a porous ceramic material. Such porous material allows conducting the reactant gas therethrough, while providing sufficient rigidity and stability for the fuel cell. The porous ceramic tubular body can be manufactured in different manners, including conventional ceramic manufacturing and/or additive layer manufacturing.

In a further implementation variant, the tubular body can comprise a plurality of channels extending parallel to an axial direction of the tubular body. In other words, each of the plurality of channels extends parallel to the inner channel of the tubular body. For instance, the plurality of channels can start and end at a respective side face of the tubular body. This facilitates an equal distribution of the reactant gas along the length of the tubular body.

In another implementation variant, the tubular body can be an anode support configured to conduct a fuel for the fuel cell. The inner and outer electrically conductive layers are then each a cathode layer. For instance, such cathode layers may be made of a porous material configured to conduct air and/or oxygen. This allows conveying air (oxygen) or another oxidising gas to stream through the inner channel and at an outer side of the tubular body, i.e. an outer side of the fuel cell. The fuel for the fuel cell (e.g., hydrogen, methane, propane or another gaseous fuel) can be conducted through the anode support (i.e., the tubular body). A reaction between fuel and oxidiser will take place through the respective inner and outer electrolyte layer, which are arranged between the anode support and the respective inner and outer electrically conductive layers.

In yet another implementation variant, the tubular body can be a cathode support configured to conduct air and/or oxygen, and the inner and outer electrically conductive layers are each an anode layer of a porous material configured to conduct a fuel for the fuel cell. Thus, the fuel cell can be operated in the opposite manner as described with respect to the previous implementation variant.

In another implementation variant, the outer electrolyte layer and the outer electrically conductive layer are further interrupted along an axial direction of the tubular body. This allows connecting the first electric terminal anywhere along the axial direction (i.e., along the longitudinal direction of the tubular body). For instance, the location of the first electric terminal can be chosen depending on the location of other fuel cells, when preparing a fuel cell stack.

On the other hand, the axially extending interruption of the outer layers further provides for arranging a plurality of first electric terminals. For example, the plurality of first electric terminals can be arranged at regular intervals along the axial direction. This reduces electric current concentrations compared to a single terminal.

It is further possible to provide an axially (longitudinally) extending first electric terminal. Thus, electrons generated by the fuel cell can be conducted anywhere along the longitudinal extension of the fuel cell. This allows a continuous collection of electrons along the longitudinal axis of the fuel cell and facilitates equal conditions in the fuel cell along its longitudinal axis.

In yet another implementation variant, the fuel cell further comprises a gas seal configured to seal the interruption of the outer electrolyte layer and the outer electrically conductive layer in a gas tight manner. Thus, the tubular body can be sealed from the ambient environment. Particularly, the gas seal can be gas tight with respect to the reactant gas conducted in the tubular body. As a mere example, the outer electrolyte layer usually functions as a gas tight seal between fuel and oxidiser of the fuel cell. Due to the interruption of the outer electrolyte layer, fuel and oxidiser can leak and/or react directly (e.g., the fuel can burn). The gas seal prevents such leakage and direct reaction of the fuel. The gas seal can be electrically conductive, in order to electrically connect the first terminal and the tubular body.

In any case, due to the inner and outer layers, the fuel cell can be operated as if the inner and outer layers function as separate fuel cells, i.e. separate electric power sources. In other words, the inner electrically conductive layer can be used as a first electric power source, and the outer electrically conductive layer can be used as a second electric power source.

In a further implementation variant, the fuel cell can further comprise an internal connector electrically connecting the inner electrically conductive layer with the outer electrically conductive layer. This allows collecting electrons from the inner and outer electrically conductive layers together and further allows all generated electrons to be conducted through a single terminal, e.g. the first terminal.

For instance, the internal connector can be arranged in the tubular body and pierces through the inner electrolyte layer and the outer electrolyte layer. In order to avoid any gas leakage from the tubular body or a gas exchange between tubular body and internal channel and outside environment, the internal interconnector can be made from a gas tight material.

Alternatively or additionally, in order to avoid a current flow between the tubular body and the inner and/or outer electrically conductive layer, the internal connector can be electrically isolated with respect to the tubular body. As a mere example, the internal connector can be coated with an electrically non-conductive material.

In yet a further implementation variant, a plurality of internal connectors can be arranged in the tubular body arranged at regular intervals along the axial direction of the tubular body. Thus, an equal electrical connection between inner and outer layers can be achieved, which also equalises the conditions of the fuel cell along its longitudinal axis.

According to a second aspect to better understand the present disclosure, a fuel cell system comprises a plurality of fuel cells according to the first aspect or one of its variants or examples with the exception of the variants having the internal interconnector.

Each fuel cell of a first subgroup of the plurality of fuel cells further comprises a second electric terminal electrically connected to the inner side of the tubular body of the respective fuel cell. Thus, the plurality of fuel cells comprises a first subgroup, i.e., a certain number of fuel cells less than the total number of fuel cells. As a mere example, the first subgroup may be consists of N-1 fuel cells, wherein N is the total number of fuel cells. It is to be understood that any number of fuel cells smaller than N can be chosen to form the first subgroup.

The fuel cell system further comprises an axial interconnector electrically connecting the second electric terminal of one fuel cell of the first subgroup with the inner electrically conductive layer of an adjacent fuel cell of the plurality of fuel cells. Thus, a chain of fuel cells can be formed, particularly along the longitudinal axis of the fuel cells. For example, in order to increase the voltage, the fuel cells of the first subgroup can be electrically interconnected in series.

As a mere example, the fuel cell or fuel cells of the plurality of fuel cells not forming part of the first subgroup can have an electric terminal that is not interconnected with another fuel cell. For example, such electric terminal can form the first or last electric terminal of the serially connected fuel cell chain.

In an implementation variant, the plurality of fuel cells can include a second subgroup of fuel cells. Each fuel cell of the second subgroup of the plurality of fuel cells further comprises a second electric terminal electrically connected to the inner side of the tubular body of the respective fuel cell. It is to be understood that the fuel cells of the second subgroup are different from the fuel cells of the first subgroup.

The fuel cell system can further comprise an axial interconnector electrically connecting the second electric terminal of one fuel cell of the second subgroup with the inner electrically conductive layer of an adjacent fuel cell of the second subgroup. Thus, as with the first subgroup, the fuel cells of the second subgroup can be electrically interconnected in series and form a chain of fuel cells.

The fuel cell system can further comprise a radial interconnector electrically connecting the first electric terminal of a first fuel cell of the first subgroup with the outer electrically conductive layer of a second fuel cell of the second subgroup. Thus, the fuel cells of the first and second subgroup can be electrically connected in parallel. This allows increasing the electric power that can be provided by the fuel cell system.

It is to be noted that the radial interconnector electrically connects the power generation of the outer layers of each fuel cell, while the axial interconnector electrically connects the power generation of the inner layers of each fuel cell. Thus, the fuel cell system can provide any desired voltage depending on the number of fuel cells in each subgroup with an increased power. The distinction between inner and outer layer power production allows further variations of electrically connecting fuel cells or fuel cell portions (inner and outer layers) to achieve any desired voltage and/or power.

Furthermore, the first fuel cell of the first subgroup can be a fuel cell in the chain of fuel cells that forms a beginning of the chain. In other words, the first fuel cell of the first subgroup is interconnected to another fuel cell only on one side (viewing in the longitudinal axis direction). The second fuel cell of the second subgroup, however, is not a first fuel cell of the second subgroup. In other words, the second fuel cell of the second subgroup is interconnected to a respective other fuel cell on both sides (viewing in the longitudinal axis direction).

Thus, the radial interconnection of the fuel cells of the first and second subgroups is performed in such a manner that the chains of fuel cells of each subgroup is displaced by one fuel cell. This allows ensuring an equivalent voltage level on which the cells of the first subgroup and the second subgroup are connected.

Furthermore, if the total number of fuel cells in each of the first and second subgroups is respectively N, N-1 fuel cell pairs of the first and second subgroups can be radially interconnected by a respective radial interconnector. Thus, the fuel cell system can provide a voltage of N times the basic voltage of one fuel cell with an increased power (factor X being equal to the number of subgroups), when compared to the power output of the variant including only the first subgroup.

In yet another implementation variant, the fuel cell system can further comprise a third subgroup of fuel cells. Each fuel cell of a third subgroup of the plurality of fuel cells further comprises a second electric terminal electrically connected to the inner side of the tubular body of the respective fuel cell. It is to be understood that the fuel cells of the third subgroup are different from the fuel cells of the first and second subgroups.

The fuel cell system can further comprise an axial interconnector electrically connecting the second electric terminal of one fuel cell of the third subgroup with the inner electrically conductive layer of an adjacent fuel cell of the plurality of fuel cells. Thus, as with the first and second subgroups, the fuel cells of the third subgroup can be electrically interconnected in series and form a chain of fuel cells.

The fuel cell system can further comprise a radial interconnector electrically connecting the first electric terminal of a first fuel cell of the second subgroup with the outer electrically conductive layer of a second fuel cell of the third subgroup. Thus, the fuel cells of the second and third subgroups can be electrically connected in parallel. This allows increasing the electric power that can be provided by the fuel cell system.

It is to be noted that the radial interconnector electrically connects the power generation of the outer layers of each fuel cell, while the axial interconnector electrically connects the power generation of the inner layers of each fuel cell. Thus, the fuel cell system can provide any desired voltage depending on the number N of fuel cells in each subgroup with an increased power. The distinction between inner and outer layer power production allows further variations of electrically connecting fuel cells or fuel cell portions (inner and outer layers) to achieve any desired voltage and/or power.

Furthermore, the first fuel cell of the second subgroup can be a fuel cell in the chain of fuel cells that forms a beginning of the chain. In other words, the first fuel cell of the second subgroup is interconnected to another fuel cell only on one side (viewing in the longitudinal axis direction). The second fuel cell of the third subgroup, however, is not a first fuel cell of the third subgroup. In other words, the second fuel cell of the third subgroup is interconnected to a respective other fuel cell on both sides (viewing in the longitudinal axis direction).

Thus, the radial interconnection of the fuel cells of the second and third subgroups is performed in such a manner that the chains of fuel cells of each subgroup is displaced by one fuel cell. This allows ensuring an equivalent voltage level on which the cells of the second subgroup and the third subgroup are connected.

Furthermore, if the total number of fuel cells in each of the second and third subgroups is N, N-1 fuel cell pairs of the second and third subgroups can be radially interconnected by a respective radial interconnector. Thus, the fuel cell system can provide a voltage of N times the basic voltage of one fuel cell with an increased power compared to the variant including the first and/or second subgroup.

It is to be understood that the present disclosure is not restricted to three subgroups of fuel cells, but that any desired number of subgroups can be chosen, in order to increase the power output of the fuel cell system.

In a further implementation variant, the fuel cell system can further comprise a radial interconnector electrically connecting the first electric terminal of a first fuel cell of the third subgroup with the outer electrically conductive layer of a second fuel cell of the first subgroup.

Furthermore, if the total number of fuel cells in each of the third and first subgroups is N, N-1 fuel cell pairs of the third and first subgroups can be radially interconnected by a respective radial interconnector. Thus, the fuel cell system can provide a voltage of N times the basic voltage of one fuel cell with an increased power compared to the variant including only the first and/or second subgroup.

According to a third aspect to better understand the present disclosure, a fuel cell system comprises a plurality of fuel cells according to the first aspect or one of its variants or examples having the internal interconnector.

The fuel cell system further comprises a radial interconnector electrically connecting the first electric terminal of a first fuel cell of the plurality of fuel cells with the outer electrically conductive layer of a second fuel cell of the plurality of fuel cells. Thus, the power output of the fuel cell system can be increased.

Furthermore, all fuel cells of the fuel cell system can be interconnected by a respective radial interconnector.

It is further to be noted, that the fuel cell system may also comprise subgroups of fuel cells, wherein the fuel cells of one subgroup are radially interconnected (i.e., have a parallel electric connection), and wherein the subgroups are axially interconnected (i.e., have a serial electric connection).

According to a fourth aspect to better understand the present disclosure, an aircraft comprises a fuel cell system of the second or third aspect or one of its variants.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates an exemplary fuel cell;
- Figure 2: schematically illustrates an exemplary fuel cell system;
- Figure 3: schematically illustrates another exemplary fuel cell;
- Figure 4: schematically illustrates another exemplary fuel cell system;
- Figure 5: schematically illustrates a further exemplary fuel cell system; and
- Figure 6: schematically illustrates an aircraft comprising a fuel cell system.

In the following description, for purposes of explanation and not limitation, specific details are set forth in order to provide a thorough understanding of the present disclosure. It will be apparent to one skilled in the art that the present disclosure may be practiced in other implementations that depart from these specific details.

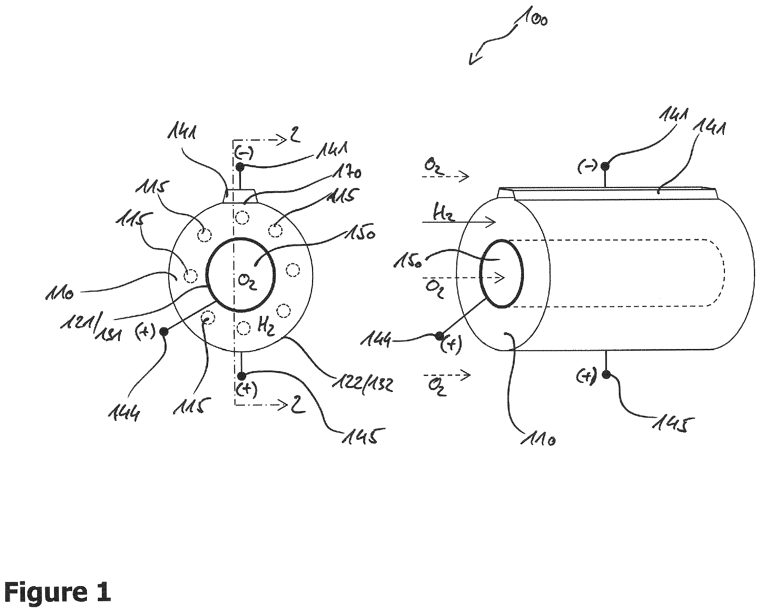

Figure 1 schematically illustrates an exemplary fuel cell 100 in a side view and a perspective view. The fuel cell 100 comprises a tubular body 110 configured to conduct a reactant gas of the fuel cell 100. The tubular body 110 forms an inner channel 150, through which a gas or fluid can flow.

Moreover, fuel, such as the illustrated hydrogen H2, or methane, propane, diesel, etc., can be introduced into the tubular body 110. The tubular body 110 can comprise a porous material, for example, a porous ceramic material, which allows a stream of fuel through the tubular body 110.

Alternatively or additionally, the tubular body 110 can comprise one or more channels 115 (only illustrated in the side view in Figure 1). The one or more channels 115 extend from one side face to the other opposite side face of the tubular body 110. Such channels 115 allow ducting the fuel through the tubular body 110, in order to better distribute the fuel throughout the entire tubular body 110. If required, one end of the channels can be closed. Alternatively, in order to connect a fuel conduct or piping (not illustrated), for example, for connection to a further fuel cell 100 or another one of the channels 115, the channel 115 can be open at both ends.

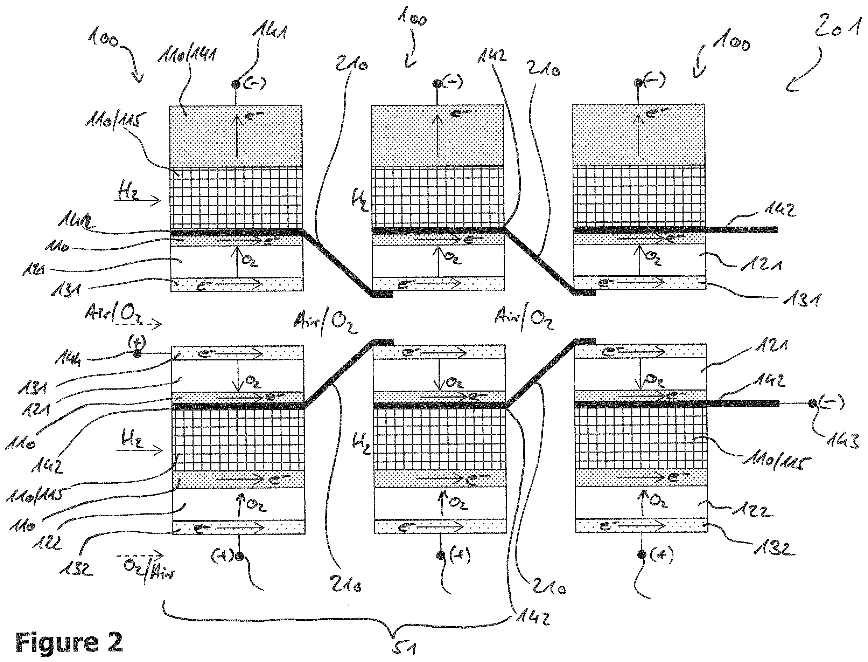

With reference to Figures 1 and 2, the fuel cell 100 further comprises an inner electrolyte layer 121 disposed on an inner side of the tubular body 110, and an outer electrolyte layer 122 disposed on the outer side of the tubular body 110. Both electrolyte layers 121, 122 divide the fuel cell in a fuel side and an oxidiser side. For instance, the electrolyte layers 121, 122 can be a dense layer of ceramic that (only) conducts oxygen ions, while the electric conductivity of the electrolyte layers 121, 122 is zero or at least as low as possible. The oxygen ions, hence, can move from the air or oxidiser side through the electrolyte layers 121, 122 to the fuel side. In the illustrated exemplary fuel cell 100 of Figures 1 and 2, the air or oxidiser side is the inner channel 150 of the tubular body 110 and the ambient environment surrounding the fuel cell 100. The fuel side is formed by the tubular body 110. With respect to the fuel, the electrolyte layers 121, 122 are substantially impermeable, so that the fuel does not conduct through the electrolyte layers 121, 122 and does not burn on the air or oxidiser side.

Furthermore, the fuel cell 100 further comprises an inner electrically conductive layer 131 disposed on the inner electrolyte layer 121, and an outer electrically conductive layer 132 disposed on the outer electrolyte layer 122. The electrically conductive layers 131, 132 are also made of a porous material, such as a metal, an alloy, a ceramic or a combination thereof. In the illustrated example, the electrically conductive layers 131, 132 allow oxygen to conduct through these layers, in order to reach the respective electrolyte layer 121, 122.

The outer electrolyte layer 122 and outer electrically conductive layer 132 are interrupted at least in a circumferential direction of the tubular body 110. In the illustrated example of Figure 1, the outer layers 122, 132 are interrupted in a circumferential direction as well as an axial direction (longitudinal direction) of the tubular body 110.

In this area, where the outer layers 122, 132 are interrupted, a first electric terminal 141 can be provided that is electrically connected to the tubular body 110. Thus, electrons moving through the electrically conductive tubular body 110 can be collected at the first electric terminal 141, which, hence, forms an electric terminal of the fuel cell 100.

As briefly indicated above, in the illustrated exemplary fuel cell 100 the tubular body 110 forms an anode support configured to conduct a fuel through the fuel cell. The inner and outer electrically conductive layers 131, 132 each form a cathode layer, for example, of a porous material configured to conduct air and/or oxygen.

As a mere example, the tubular body 110 can be made from one or more of the following materials: Inconel, Hastelloy, Crofer, or the like. The cathode layers 131, 132 can be made from one or more of the following materials: LSM, LSC, LSCF, or the like. Furthermore, the electrolyte layers 121, 122 can be made from one or more of the following materials: YSZ, ScSZ or proton conducting ceramic electrolytes like yttrium-doped barium cerate.

As a mere example, the fuel cell 100 can be a solid oxide fuel cell (SOFC). The fuel cell 100 can oxidise the fuel at a temperature between 500°C and 1000°C.

It is to be understood that the fuel cell 100 can operate in the opposite way, so that the tubular body 110 forms a cathode support configured to conduct air and/or oxygen therethrough. The inner and outer electrically conductive layers 131, 132 then each form an anode layer of a porous material configured to conduct a fuel for the fuel cell 100. The electrolyte layers 121, 122 can be the same as in the illustrated example.

Referring back to Figures 1 and 2, as the outer electrolyte layer 122 is interrupted in the area of the first electric terminal 141, fuel could leak through the opening in the outer electrolyte layer 122. In order to prevent such fuel leakage, a gas seal 170 (only illustrated in the side view of Figure 1) can be formed in or on the tubular body 110.

Alternatively, the outer electrolyte layer 122 is not interrupted, but only the outer electrically conductive layer 132 is interrupted in the area of the first electric terminal 141.

Figure 2 schematically illustrates a fuel cell system 201 comprising a plurality of fuel cells 100, such as the fuel cell 100 illustrated in Figure 1. Figure 2 illustrates a cross-section through three of these fuel cells 100, although any arbitrary number of fuel cells 100 can be provided in the fuel cell system 201.

The plurality of fuel cells 100 comprises a first subgroup 51, wherein each fuel cell 100 of the first subgroup 51 comprises a second electric terminal 142 electrically connected to the inner side of the tubular body 110 of the respective fuel cell. An interconnector 210 electrically connects the second electric terminal 142 of one fuel cell 100 of the first subgroup 51 with the inner electrically conductive layer 131 of an adjacent fuel cell 100 of the plurality of fuel cells 100. This allows connecting the fuel cells 100 in series, so that the voltage provided by the fuel cell system 201 increases.

The last fuel cell 100 in this chain of interconnected fuel cells 100 (the rightmost fuel cell 100 in Figure 2) can be provided with a third terminal 143 electrically connected to the inner side of the tubular body 110. Since the tubular body 110 is electrically conductive, the third terminal 143 may be omitted and only the first terminal 141 can be used.

Furthermore, a fourth terminal 144 can be provided that is electrically connected to the inner electrically conductive layer 131 of the first fuel cell 100 in the first subgroup 51. Thus, the fuel cell system 201 forms an electric potential between the fourth terminal 144 of the first fuel cell 100 and the first terminal 141 and/or the second terminal 142 of the last fuel cell in the first subgroup 51.

A fifth electric terminal 145 can be provided that is electrically connected to the outer electrically conductive layer 132 of each fuel cell 100 of the fuel cell system 201.

Thus, an electric potential between each of the fifth electric terminal 145 and the first terminal 141 and/or the second terminal 142 of the last fuel cell 100 is formed, if the fuel cells 100 of the fuel cell system 201 operate.

Although not illustrated in Figure 2, the tubular body 110 and/or the one or more channels 115 in the tubular body 110 of two adjacent fuel cells 100 can be connected by a fuel duct or piping. Thus, it is sufficient to supply fuel to the first fuel cell 100 and duct it through each fuel cell 100 and the (non-illustrated) fuel duct or piping up to the last fuel cell 100.

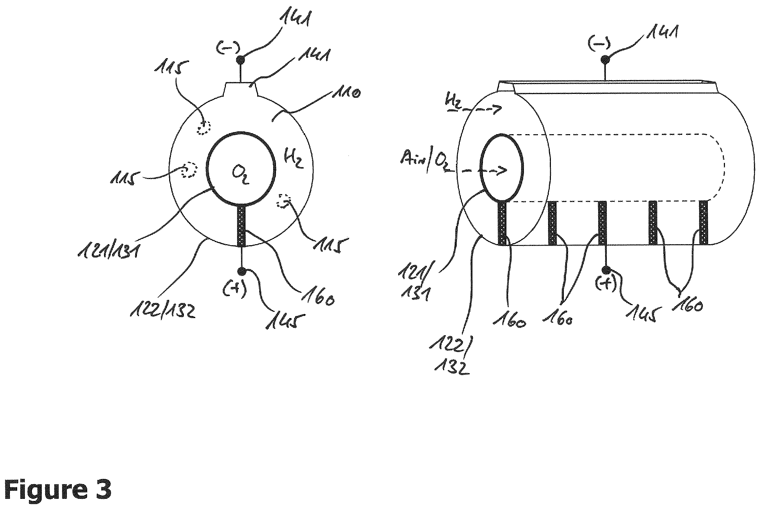

Figure 3 illustrates another exemplary fuel cell 100 (again a side view and a perspective view thereof). Features of this fuel cell 100 that are the same or have the same functionality as in the fuel cell 100 of Figures 1 and 2 are indicated by the same reference numerals. For the sake of brevity, the corresponding description is omitted.

The fuel cell 100 of Figure 3 can further comprise an internal connector 160 electrically connecting the inner electrically conductive layer 131 with the outer electrically conductive layer 132. This means that the internal connector 160 is arranged in the tubular body 110 and pierces through the inner electrolyte layer 121 and the outer electrolyte layer 122. Thus, electric current can flow between the inner and outer electrically conductive layers 131, 132.

Compared to the fuel cell 100 of Figures 1 and 2 the power of the fuel cell 100 of Figure 3 is increased, while the fuel cell 100 of Figures 1 and 2 allows two different electrical terminals 144 and 145 of the electrically separated inner and outer electrically conductive layers 131, 132.

Figure 3 illustrates a plurality of internal connectors 160 arranged in the tubular body 110 at regular intervals along the axial direction of the tubular body 110. This allows distributing a current flow throughout the electrically conductive layers 131, 132 along the longitudinal axis (axial direction) of the tubular body 110. In order to avoid any current losses, each of the internal connectors 160 can be electrically isolated, particularly with respect to the tubular body 110 (forming the opposite electric pole).

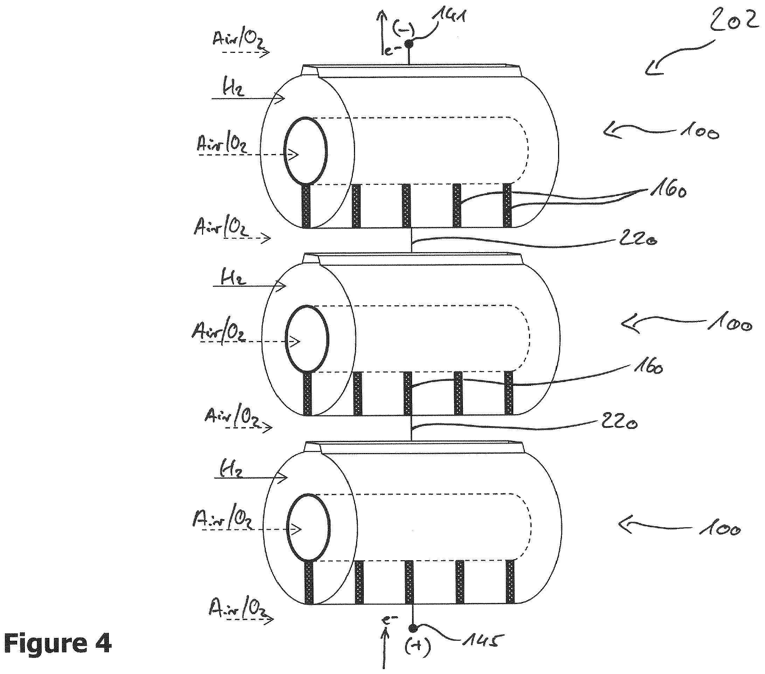

Figure 4 illustrates a further exemplary fuel cell system 202 comprising a plurality of fuel cells 100 as illustrated in Figure 3. The plurality of fuel cells 100 (three in Figure 4) can be interconnected in a radial direction (perpendicular to the longitudinal direction or axial direction). Particularly, the fuel cell system 202 comprises a radial interconnector 220 electrically connecting the first electric terminal 141 of a first fuel cell 100 of the plurality of fuel cells 100 with the outer electrically conductive layer 131 of a second fuel cell 100 of the plurality of fuel cells 100. Thus, the fuel cells 100 of the fuel cell system 202 can provide a higher electric power than a single fuel cell 100.

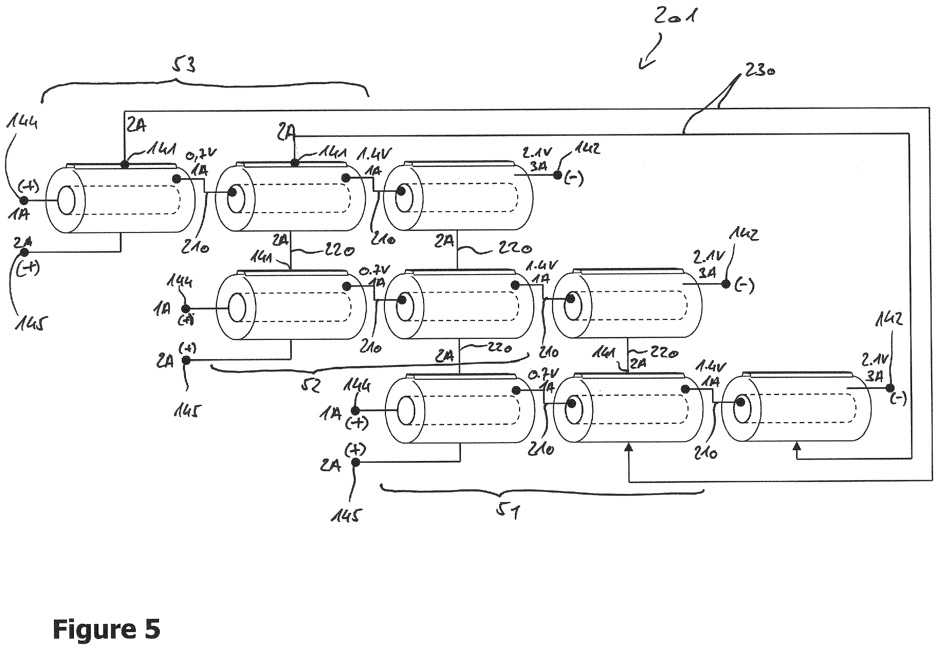

Figure 5 illustrates another exemplary fuel cell system based on (or comprising) the fuel cell system 201 of Figure 2. As can be derived from Figure 5, the fuel cell system 201 of Figure 2 can be found in each row of fuel cells 100 in Figure 5.

Thus, the fuel cell system 201 comprises a second subgroup 52 of the plurality of fuel cells 100. Each of these fuel cells 100 of the second subgroup 52 can further comprise a second electric terminal 142 electrically connected to the inner side of the tubular body 110 of the respective fuel cell. The fuel cell system 201 comprises an axial interconnector 210 electrically connecting the second electric terminal 142 of one fuel cell 100 of the second subgroup 52 with the inner electrically conductive layer 131 of an adjacent fuel cell 100 of the plurality of fuel cells 100. The explanations made with respect to the first subgroup 51 and Figure 2 also apply to the second subgroup 52.

Moreover, the fuel cell system 201 can comprise a third subgroup 53, which is formed and electrically interconnected in the same manner as the first subgroup 51 and/or the second subgroup 52.

While each subgroup 51, 52, 53 provides a higher voltage compared to a single fuel cell 100, the power of the overall fuel cell system 201 can be increased by a radial interconnection of the fuel cells.

Specifically, a radial interconnector 220 can electrically connect the first electric terminal 141 of a first fuel cell of the first subgroup 51 with the outer electrically conductive layer 131 of a second fuel cell of the second subgroup 52. A displacement of one fuel cell (offset of one fuel cell) is made, in order to ensure an equivalent voltage level (in diagonal direction).

Likewise, a radial interconnector 220 can electrically connect the first electric terminal 141 of a first fuel cell of the second subgroup 52 with the outer electrically conductive layer 131 of a second fuel cell of the third subgroup 53. A displacement of one fuel cell (offset of one fuel cell) is made, in order to ensure an equivalent voltage level (in diagonal direction).

Furthermore, the second fuel cell 100 of the first subgroup 51 is electrically connected via a radial interconnector 220 with the third fuel cell 100 of the second subgroup 52, and the second fuel cell 100 of the second subgroup 52 is electrically connected via a radial interconnector 220 with the third fuel cell 100 of the third subgroup 53.

In addition, in order to complete the fuel cell system 201, the fuel cell system 201 further comprises a radial interconnector 230 electrically connecting the first electric terminal 141 of a first fuel cell 100 of the third subgroup 53 with the outer electrically conductive layer 131 of a second fuel cell 100 of the first subgroup 51. Likewise, a radial interconnector 230 electrically connects the first electric terminal 141 of a second fuel cell 100 of the third subgroup 53 with the outer electrically conductive layer 131 of a third fuel cell 100 of the first subgroup 51.

It is to be understood that the fuel cell system 201 can comprise more or less fuel cells 100 in axial direction, particularly more or less fuel cells 100 in each subgroup 51, 52, 53. Likewise, the fuel cell system 201 can comprise more or less subgroups of fuel cells 100. By electrically connecting the fuel cells 100 corresponding to the illustrated manner, even if there are more fuel cells per subgroup and/or more subgroups, a fuel cell system 201 can be provided with any desired voltage as well as any desired power.

As a mere example, each fuel cell in the fuel cell system 201 of Figure 5 produces 0.7 V, so that each subgroup 51, 52, 53 provides a voltage of 2.1 V. Since the fuel cells 100 of the illustrated fuel cell system 201 correspond to those of Figures 1 and 2 (not having internal interconnectors 160) different power levels can be achieved, which are illustrated in Figure 5 as 1 A, 2 A or 3 A. It is to be understood that the voltage as well as the power can be increased or decreased.

Furthermore, Figure 5 illustrates each third fuel cell 100 of the first to third subgroups 51, 52, 53 (each fuel cell 100 at the right end of each fuel cell chain) as not having the first terminal 141. This may allow providing an easier to manufacture fuel cell 100, as the interruption of the outer layers 122, 132 does not have to be provided. However, the fuel cell system 201 can likewise have the same kind of fuel cell 100 throughout the entire plurality of fuel cells 100.

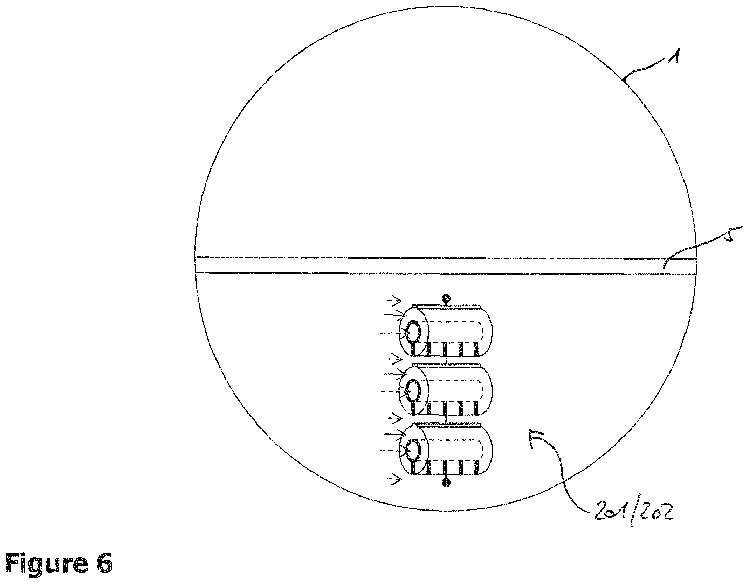

Figure 6 schematically illustrates an aircraft 1 having an intermediate floor 5. The aircraft 1 can comprise a fuel cell system, such as the fuel cell system 202 illustrated in Figure 6. It is to be understood that likewise fuel cell system 201 are illustrated in Figure 2 or 5 can be installed in the aircraft 1. In addition, one or more of such fuel cell systems 201, 202 can be installed in the aircraft 1. The electric power provided by the fuel cell system(s) 201, 202 can be used to operate any electric or electronic device (not illustrated) in the aircraft 1. Furthermore, the heat produced by the fuel cells can also be used, for example, to heat water, to pre-heat air for a turbine engine, or the like.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A fuel cell (100) comprising:
a tubular body (110) configured to conduct a reactant gas of the fuel cell (100), wherein the tubular body (110) has an inner side surrounding an inner channel (150) and an outer side;
an inner electrolyte layer (121) disposed on the inner side of the tubular body (110);
an outer electrolyte layer (122) disposed on the outer side of the tubular body (110);
an inner electrically conductive layer (131) disposed on the inner electrolyte layer (121);
an outer electrically conductive layer (132) disposed on the outer electrolyte layer (122); and
a first electric terminal (141),
wherein the outer electrolyte layer (122) and the outer electrically conductive layer (132) are interrupted at least in a circumferential direction of the tubular body (110), and the first electric terminal (141) is electrically connected to the tubular body (110) at the interruption of the outer electrolyte layer (122) and the outer electrically conductive layer (132).

2. The fuel cell (100) of claim 1, wherein the tubular body (110) comprises a porous ceramic material, and/or
wherein the tubular body (110) comprises a plurality of channels (115) extending parallel to an axial direction of the tubular body (110).

3. The fuel cell (100) of claim 1 or 2, wherein the tubular body (110) is an anode support configured to conduct a fuel for the fuel cell (100), and the inner and outer electrically conductive layers (131, 132) are each a cathode layer of a porous material configured to conduct air and/or oxygen, and/or
wherein the tubular body (110) is a cathode support configured to conduct air and/or oxygen, and the inner and outer electrically conductive layers (131, 132) are each an anode layer of a porous material configured to conduct a fuel for the fuel cell (100).

4. The fuel cell (100) of one of claims 1 to 3, wherein the outer electrolyte layer (122) and the outer electrically conductive layer (132) are further interrupted along an axial direction of the tubular body (110).

5. The fuel cell (100) of one of claims 1 to 4, further comprising:
a gas seal (170) configured to seal the interruption of the outer electrolyte layer (122) and the outer electrically conductive layer (132) in a gas tight manner, particularly with respect to the reactant gas conducted in the tubular body (110).

6. The fuel cell (100) of one of claims 1 to 5, further comprising:
an internal connector (160) electrically connecting the inner electrically conductive layer (131) with the outer electrically conductive layer (132),
wherein the internal connector (160) is arranged in the tubular body (110) and pierces through the inner electrolyte layer (121) and the outer electrolyte layer (122).

7. The fuel cell (100) of claim 6, wherein a plurality of internal connectors (160) are arranged in the tubular body (110) at regular intervals along the axial direction of the tubular body (110).

8. A fuel cell system (201) comprising:
a plurality of fuel cells (100) according to one of claims 1 to 5, wherein each fuel cell (100) of a first subgroup (51) of the plurality of fuel cells (100) further comprises a second electric terminal (142) electrically connected to the inner side of the tubular body (110) of the respective fuel cell; and
an axial interconnector (210) electrically connecting the second electric terminal (142) of one fuel cell (100) of the first subgroup (51) with the inner electrically conductive layer (131) of an adjacent fuel cell (100) of the plurality of fuel cells (100).

9. The fuel cell system (201) of claim 8, wherein each fuel cell (100) of a second subgroup (52) of the plurality of fuel cells (100) further comprises a second electric terminal (142) electrically connected to the inner side of the tubular body (110) of the respective fuel cell,
wherein the fuel cell system (201) further comprises:
an axial interconnector (210) electrically connecting the second electric terminal (142) of one fuel cell (100) of the second subgroup (52) with the inner electrically conductive layer (131) of an adjacent fuel cell (100) of the plurality of fuel cells (100); and
a radial interconnector (220) electrically connecting the first electric terminal (141) of a first fuel cell (100) of the first subgroup (51) with the outer electrically conductive layer (131) of a second fuel cell (100) of the second subgroup (52).

10. The fuel cell system (201) of claim 9, wherein each fuel cell (100) of a third subgroup (53) of the plurality of fuel cells (100) further comprises a second electric terminal (142) electrically connected to the inner side of the tubular body (110) of the respective fuel cell,
wherein the fuel cell system (201) further comprises:
an axial interconnector (210) electrically connecting the second electric terminal (142) of one fuel cell (100) of the third subgroup (53) with the inner electrically conductive layer (131) of an adjacent fuel cell (100) of the plurality of fuel cells (100); and
a radial interconnector (220) electrically connecting the first electric terminal (141) of a first fuel cell (100) of the second subgroup (52) with the outer electrically conductive layer (131) of a second fuel cell (100) of the third subgroup (53),
wherein, preferably, the fuel cell system (201) further comprises:
a radial interconnector (230) electrically connecting the first electric terminal (141) of a first fuel cell (100) of the third subgroup (53) with the outer electrically conductive layer (131) of a second fuel cell (100) of the first subgroup (51).

11. A fuel cell system (202) comprising:
a plurality of fuel cells (100) according to claim 6 or 7; and
a radial interconnector (220) electrically connecting the first electric terminal (141) of a first fuel cell (100) of the plurality of fuel cells (100) with the outer electrically conductive layer (131) of a second fuel cell (100) of the plurality of fuel cells (100).

12. An aircraft (1), comprising:
a fuel cell system according to one of claims 8 to 11.
